# FASCICULE DE BREVET EUROPEEN

(11) **EP 3 668 736 B1**
(45) Date de publication et mention de la délivrance du brevet: **22.06.2022**
(21) Numéro de dépôt: 18782484.2
(22) Date de dépôt: 18.09.2018
(51) Int. Cl.: B60K 1/04, H01M 50/20, H01M 50/24

(54) **BOITIER DE SUPPORT POUR BATTERIE**
TRAGKASTEN FÜR BATTERIE
SUPPORT BOX FOR BATTERY

(30) Priorité: 04.10.2017 FR 1759271
(43) Date de publication de la demande: 24.06.2020
(73) Titulaire: Valeo Systemes Thermiques, 78322 Le Mesnil Saint-Denis Cedex (FR)
(72) Inventeur: DA COSTA PITO, Sergio, 78322 Le Mesnil Saitn Denis Cedex (FR); HENON, Emmanuel, 78322 Le Mesnil Saitn Denis Cedex (FR); GUYOMARD, Jean-Nicolas, 27930 Le Mesnil Fuguet (FR); RUDLOFF, Emmanuel, 78322 Le Mesnil Saitn Denis Cedex (FR); LAIR, Guillaume, 78322 Le Mesnil Saitn Denis Cedex (FR)
(74) Mandataire: Valeo Systèmes Thermiques
(86) Numéro de dépôt international: PCT/FR2018/052282
(87) Numéro de publication internationale: WO 2019/068983

(56) Documents cités:
- EP-A1- 2 910 394
- EP-A1- 3 088 224
- US-A- 5 620 057
- US-B1- 6 227 322

## Description

La présente invention concerne un boitier de support d'un pack batterie, et plus particulièrement un boitier de support d'un pack batterie pour des véhicules automobiles de type hybride ou de type électrique. L'invention se rapporte également à un ensemble comportant un tel boitier de support.

Des boitiers contenant des batteries électriques destinées aux véhicules électriques sont connus. Ils comportent, en général, une batterie, un système de gestion de la batterie, un capot et une structure inférieure permettant d'accueillir la batterie. Plus particulièrement, la structure inférieure sert de support à la batterie. Celle-ci présente un poids considérable, poids qui ne fait qu'augmenter avec le développement des véhicules 100% électriques.

Afin d'améliorer la rigidité du boitier, l'utilisation de moyens de renforcement a été mentionnée. Ces moyens de renforcement se présentent en général sous la forme de barres de renforts métalliques placées sous le boitier. Toutefois, les pack batteries créés sont particulièrement lourds et augmentent la consommation du véhicule automobile.

Le document US2012103714 propose, par exemple, de pallier à certains de ces inconvénients en utilisant une structure inférieure constituée d'un matériau composite associant des fibres et du plastique. Cependant, ces matériaux restent lourds et leurs coûts de fabrication sont particulièrement élevés.

Des autres boitiers de support pour batterie sont connus des documents EP 3 088 224 A1, US 6 227 322 B1, US 5 620 057 A et EP 2 910 394 A1.

Un des buts de la présente invention est de remédier au moins partiellement aux inconvénients de l'art antérieur et de proposer un boitier de support d'un pack batterie léger et bon marché.

Pour cela, l'invention propose un boitier de support pour batterie selon la revendication 1.

Le boitier selon l'invention peut comporter une ou plusieurs des caractéristiques suivantes prises seules ou en combinaison :
- le matériau résistant peut avoir une limite élastique en traction supérieure à 350 MPa ;
- le matériau résistant peut être un matériau composite thermoplastique renforcé avec des fibres de verre ;
- le matériau ductile peut avoir une capacité d'allongement en traction supérieure à 50% ;
- le matériau ductile peut être un polypropylène modifié ou un élastomère ;
- le matériau d'assemblage peut être du polypropylène contenant des fibres de verre ou du propylène contenant des fibres de carbone ;
- le matériau d'assemblage peut posséder un module d'élasticité compris entre 4 GPa et 12 GPa et/ou une limite élastique comprise entre 70 MPa et 150 MPa ;
- la face principale peut être sensiblement rectangulaire ;
- la bordure peut s'étendre sur toute la périphérie de la face principale ;
- la bordure peut être formée de deux faces sensiblement inclinées rattachées par un bord supérieur parallèle à la face principale ;
- la structure de support peut être composée d'une peau inférieure et d'une peau supérieure, lesdites peaux délimitant un logement ;
- la peau supérieure peut comporter un rebord venant en contact avec un rebord de la peau inférieure, lesdits rebords étant reliés l'un à l'autre de manière hermétique ;
- les rebords peuvent être reliés par un joint d'étanchéité, en particulier par un joint d'étanchéité surmoulé ;
- le logement peut s'étendre sur toute la face principale et la bordure ;
- la peau inférieure peut être plane et la peau supérieure ondulée, laquelle peau supérieure a des points inférieurs en contact avec la peau inférieure et des points supérieurs destinés à venir en contact avec la batterie électrique ;
- des éléments de renfort peuvent être placés dans le logement ;
- la bordure peut comporter des éléments de renforts ;
- des éléments de renforts peuvent être placés au niveau de la face principale, entre la peau supérieure et la peau inférieure ;
- la structure de support comprend trois matériaux différents. Ces trois matériaux sont choisis parmi les plastiques, polymères et/ou élastomères, avec éventuellement des fibres de verre et/ou de carbone. Autrement dit, il n'y a pas de matériau métallique dans la structure de support.

Un autre aspect de l'invention est un ensemble comportant un boitier selon l'invention, une batterie électrique étant insérée dans le logement de manière à être enserrée entre la structure de support et le capot.

Selon un exemple de l'invention, un joint d'étanchéité peut être positionné entre le capot et le bord supérieur de la bordure.

D'autres caractéristiques et avantages de l'invention apparaîtront plus clairement à la lecture de la description suivante, donnée à titre d'exemple illustratif et non limitatif, et des dessins annexés parmi lesquels :
- La figure 1 montre une représentation schématique d'un véhicule électrique équipé d'un boitier de support selon l'invention ;
- la figure 2 montre une représentation schématique d'une portion du boitier de la figure 1;
- la figure 3 montre une représentation de la structure de support du boitier de la figure 2 ;
- la figure 4 montre une coupe selon AA du boitier de la figure 2 ;
- la figure 5 montre une représentation schématique d'une variante de réalisation du boitier de la figure 4, des éléments de renfort étant présents dans la bordure de la structure de support ;
- la figure 6 montre une représentation schématique d'une variante de réalisation du boitier de la figure 4, des éléments de renfort étant présents dans la bordure et la face principale ;
- la figure 7 montre une représentation schématique d'une variante de réalisation du boitier de la figure 6.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un mode de réalisation. De simples caractéristiques de différents modes de réalisation peuvent également être combinées et/ou interchangées pour fournir d'autres réalisations.

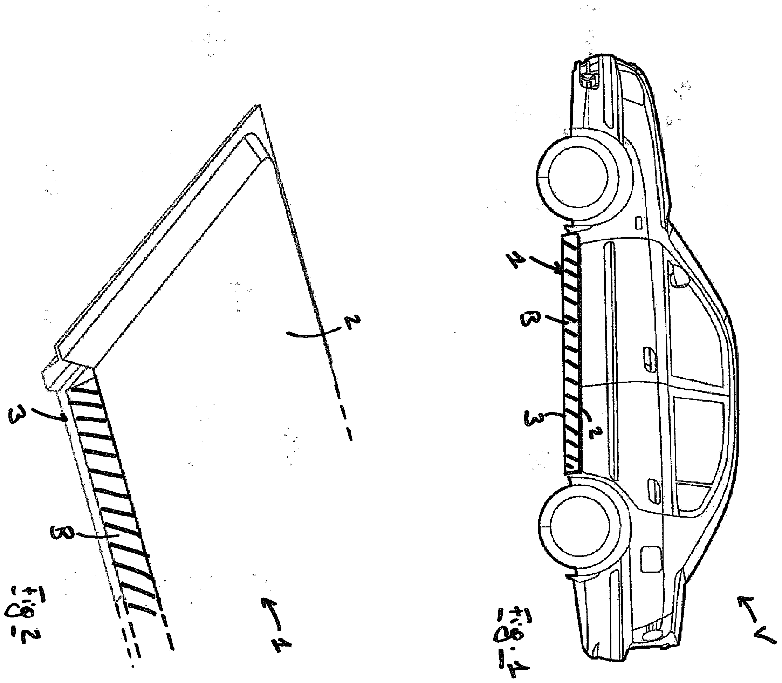

Comme illustré sur la figure 1, les véhicules électriques V sont généralement munis d'un pack batterie B venant s'installer sous le véhicule V, la taille du pack batterie B peut varier en fonction des besoins dudit véhicule V. Celui-ci est positionné sous le châssis et fixé au moyen d'un boitier de support 1.

Un boitier de support 1 selon l'invention est représenté sur la figure 2. Celui-ci comporte un capot 2 et une structure de support 3 formant un logement 4 dans lequel vient se loger la batterie B du véhicule électrique. Le capot 2 se compose, de préférence, de moyens de rattachement au châssis du véhicule. Ces moyens de rattachement connus peuvent, par exemple être de la colle ou encore un système de vis.

Le capot 2 n'étant pas soumis à de fortes contraintes de poids, il peut facilement être fabriqué dans n'importe quelle matière plastique, permettant ainsi de diminuer le poids total du véhicule et par conséquent sa consommation.

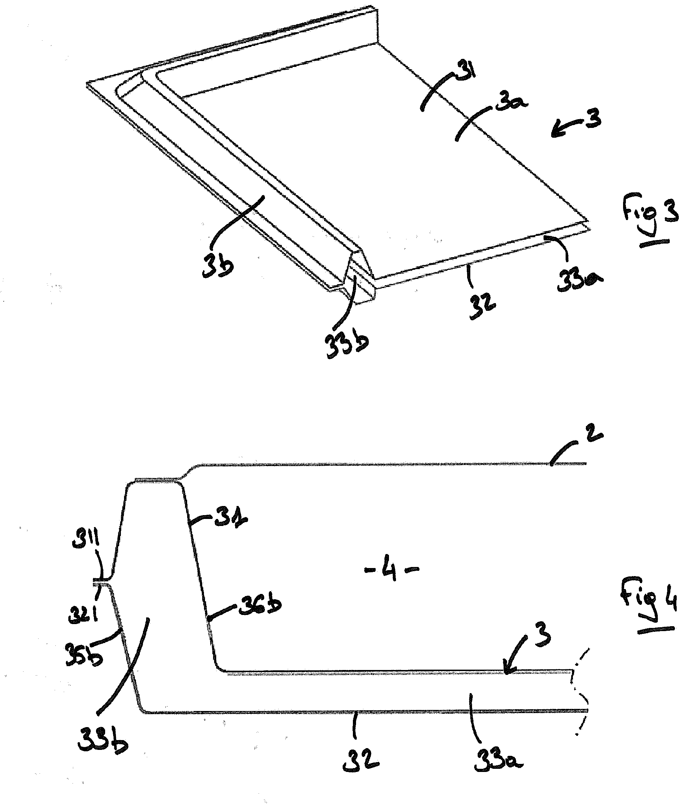

La structure de support 3 représentée sur la figure 3 se compose également d'une face principale 3a sensiblement plane. Sur les figures annexées, la face principale 3a est représentée comme étant de forme rectangulaire. Toutefois, elle peut se présenter sous n'importe quelle forme convenant à l'Homme du métier.

Le capot 2 a une forme sensiblement équivalente à celle de la face principale 3a de manière à recouvrir totalement la batterie insérée dans logement créé entre le capot 2 et la face 3a.

Une bordure 3b est présente sur au moins une partie de la périphérie de la face principale 3a, préférentiellement sur la totalité de la périphérie. Cette bordure 3b et la face principale 3a peuvent être d'un seul tenant. Toutefois, elles peuvent également se présenter sous la forme de deux composants rattachés ultérieurement.

La bordure 3b est préférentiellement composée d'un bord supérieur 34b sensiblement plat et sur lequel le capot 2 vient se poser lorsque le boitier 1 est installé sur le châssis du véhicule électrique. La bordure 3b est, de préférence, composée de deux parois latérales 35b, 36b rattachée par le bord supérieur 34b. Ces parois latérales 35b, 36b sont préférentiellement verticales (sensiblement perpendiculaires à la face principale 3a), mais elles peuvent également être sensiblement inclinées, comme représenté sur les figures annexées. Cette inclinaison permet d'améliorer la rigidité du boitier 1 et ainsi mieux supporter les lourdes charges dues à la batterie.

Dans un mode de réalisation préféré, le bord supérieur 34b est équipé d'un joint d'étanchéité permettant de fermer le boitier 1 de manière étanche de façon à éviter tout disfonctionnement de la batterie.

Dans un mode de réalisation (non représenté), la structure support 3 est réalisée en une seule couche, permettant ainsi une économie considérable et pouvant convenir à des batteries de taille réduite.

Sur les figures annexées, la structure de support 3 se compose d'une peau inférieure 32 et d'une peau supérieure 31. Ces deux peaux 31, 32 délimitent un logement 33a, 33b. Elles peuvent avoir des épaisseurs variables qui dépendent de la rigidité souhaitée par l'utilisateur et donc du poids de la batterie. Des peaux 31, 32 plus fines permettent de diminuer la quantité de matériau utilisé et ainsi réduire les coûts de fabrication. Les deux peaux 31, 32 peuvent créer la face principale 3a et la bordure 3b, ou uniquement l'un des deux composants 3a, 3b.

Sur les figures 4, 5, 6 et 7, la peau supérieure 31 comporte, au niveau de la bordure 3b, un rebord 311 et la peau inférieure 32 comporte un rebord 321. Lors de l'assemblage des deux peaux 31, 32, les rebords 311, 321 sont installés de manière à venir en contact intime l'un avec l'autre. Un moyen de fermeture hermétique est alors utilisé pour venir fermer le boitier 1 et ainsi protéger la batterie après son installation sur le véhicule automobile. Ce moyen de fermeture hermétique peut, par exemple, être un joint d'étanchéité surmoulé ou encore de la colle.

Dans un mode de réalisation préféré, les rebords 311, 321 sont placés au niveau de la paroi latérale extérieure 35b de la bordure 3b, préférentiellement à mi hauteur de la bordure 3b.

La structure de support 3 est composée de plusieurs matériaux permettant une meilleure résistance aux contraintes exercées et ainsi obtenir une meilleure répartition de la charge. La demanderesse a remarqué qu'une meilleure résistance était obtenue lorsque différents types de matériaux étaient combinés.

Dans un mode de réalisation préféré, la structure 3 est formée par des procédés tels qu'un procédé de thermo-moulage et/ou un procédé d'injection.

Au moins une zone, préférentiellement la totalité, de la structure de support 3 est fabriquée en combinant un matériau ductile, un matériau résistant (ou de haute raideur) et un matériau d'assemblage. Cette combinaison particulière de matériaux permet de résister aux fortes charges ainsi qu'aux contraintes de températures. De plus, elle permet de mieux protéger la batterie d'éventuels chocs dus à des jets de pierres et/ou de cailloux lors de l'utilisation du véhicule.

Le matériau ductile, c'est-à-dire pouvant supporter une grande déformation plastique, a préférentiellement une capacité en traction supérieur à 50%. Ce matériau va permettre de pallier aux déformations éventuelles tout en conservant l'intégrité du boitier 1. Un tel matériau est capable de se déformer sans rompre en cas de choc. Autrement dit, il est capable de se déformer plastiquement sans se rompre. Ce matériau est préférentiellement un polymère non renforcé, comme par exemple un polypropylène modifié ou encore n'importe quel polyamide, polyéthylène comportant un certain pourcentage d'élastomères.

Le matériau résistant a préférentiellement une limite élastique en traction supérieure à 350 MPa. Il peut se présenter, par exemple, sous la forme d'un matériau composite thermoplastique comportant des fibres de renforcement. Ces fibres peuvent, par exemple, être des fibres de carbone ou encore des fibres de verres.

Les fibres peuvent notamment être des fibres de verre et/ou de carbone. Ces fibres peuvent être des fibres discontinues et ainsi permettre une fabrication par injection. Les fibres peuvent être des fibres continues et permettre une par thermoformage. Ces modes de fabrications ne sont pas limitatifs et il est tout à fait possible d'imaginer tout autre mode de fabrication connu. Les fibres peuvent être alignées dans une même direction ou dans des directions différentes.

La structure de support 3 comporte un troisième matériau servant de matériau d'assemblage qui permet de renforcer ladite structure de support 3 et de créer des interfaces pour l'assemblage. Ce matériau d'assemblage est un matériau plastique injectable. Ledit matériau d'assemblage a un module d'élasticité compris entre 4 GPa et 12 GPa et une limite élastique comprise entre 70 MPa et 150 MPa.

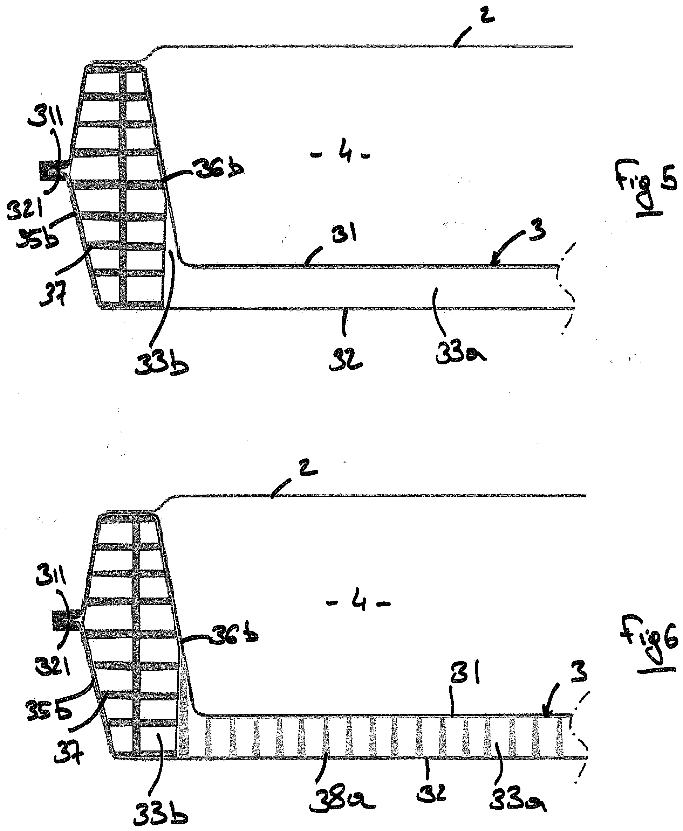

Sur les figures 5, 6 et 7, le logement 33b, créé par les deux peaux 31, 32 au niveau de la bordure 3b, comporte des éléments de renforts 37. Ces éléments de renforts 37 peuvent, par exemple, se présenter sous la forme de nervures ou encore sous la forme de barres de renforcement. Ces éléments 37 permettent de rigidifier le boitier 1 et éviter d'endommager le pack batterie en cas d'accident.

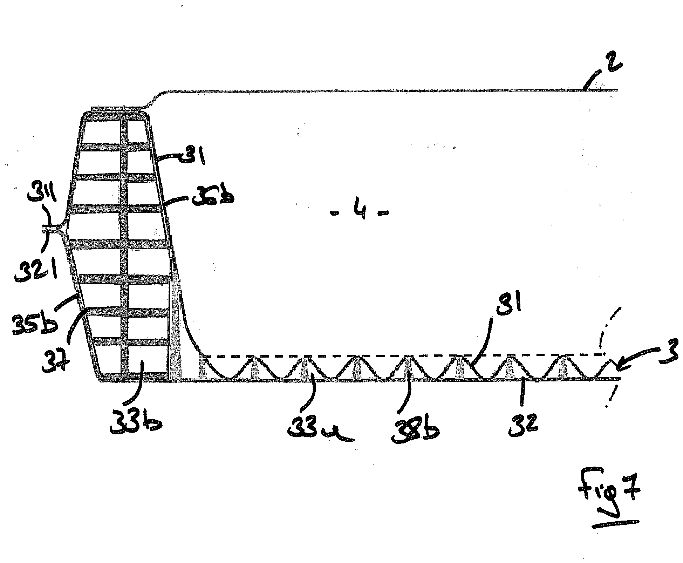

Comme représenté sur les figures 6 et 7, des éléments de renforts 38a, 38b peuvent également se trouver entre les deux peaux 31, 32 au niveau de la face principale 3a. Ces renforts 38a, 38b permettent d'encore améliorer la rigidité du boitier 1 et éviter les chocs provoqués par les cailloux et les pierres provenant de dessous de la voiture.

Sur la figure 6, un mode de réalisation comportant des éléments de renforts 38a est représenté. Ces éléments de renfort 38a peuvent, par exemple, être des nervures, des plots, des barres... Ils sont préférentiellement intégrés entre les deux peaux 31, 32. De la même manière que pour le reste de la structure de support 3, ces éléments 38a peuvent être réalisés par moulage, ou injection en même temps que la création du boitier 1. Ils peuvent éventuellement être ajoutés ultérieurement par injection.

La figure 7 représente un mode de réalisation similaire à celui de la figure 6, mis à part le fait que la peau supérieure 31 est ondulée. Les ondulations créées permettent de créer un effet élastique permettant de mieux maintenir la batterie en place une fois que celle-ci est placée dans le boitier 1. Les éléments de renforts 38b sont alors placés entre les ondulations créées par la peau supérieure 31.

Les éléments de renforts 37, 38a, 38b peuvent, par exemple, être fabriqués en matériau plastique, en matériau composite ou encore en métal. Ils sont, de préférence réalisés par des procédés comme un procédé d'injection, ou encore un procédé d'extrusion.

Il doit être bien entendu toutefois que ces exemples de réalisation sont donnés à titre d'illustration de l'objet de l'invention. L'invention n'est pas limitée à ces modes de réalisation décrits précédemment et englobe diverses modifications que pourra envisager l'homme du métier dans le cadre de la présente invention qui est défini par les revendications.

## Revendications

1. Boitier (1) de support pour batterie comportant un capot (2) apte à être rattaché au châssis d'un véhicule et une structure de support (3) apte à recevoir une batterie électrique (B), ladite structure de support (3) se composant d'une face principale (3a) dont au moins une partie de la périphérie est équipée d'une bordure (3b), la structure de support (3) étant fabriquée en combinant plusieurs matériaux, lesquels matériaux comprennent un matériau ductile, un matériau résistant et un matériau d'assemblage, **caractérisé en ce que** ledit matériau d'assemblage est un matériau plastique injectable apte à renforcer ledit boitier et/ou à créer des interfaces pour l'assemblage.

2. Boitier (1) selon la revendication 1, **caractérisé en ce que** le matériau résistant a une limite élastique en traction supérieure à 350 MPa.

3. Boitier (1) selon l'une des revendications 1 ou 2, **caractérisé en ce que** le matériau ductile a une capacité d'allongement en traction supérieure à 50%.

4. Boitier (1) selon l'une des revendications 1 à 3, **caractérisé en ce que** le matériau d'assemblage possède un module d'élasticité compris entre 4 GPa et 12 GPa et/ou une limite élastique comprise entre 70 MPa et 150 MPa.

5. Boitier (1) selon l'une des revendications 1 à 4, **caractérisé en ce que** la bordure (3b) est formée de deux faces (35b, 36b) sensiblement inclinées rattachées par un bord supérieur (34b) parallèle à la face principale (3a).

6. Boitier (1) selon l'une des revendications 1 à 5, **caractérisé en ce que** la structure de support (3) est composée d'une peau inférieure (32) et d'une peau supérieure (31), lesdites peaux (31, 32) délimitant un logement (33a, 33b).

7. Boitier (1) selon la revendication 6, **caractérisé en ce que** la peau inférieure (32) est plane et la peau supérieure (31) est ondulée, laquelle peau supérieure (31) a des points inférieurs en contact avec la peau inférieure (32) et des points supérieurs destinés à venir en contact avec la batterie électrique (B).

8. Boitier (1) de support selon l'une des revendications 6 ou 7, **caractérisé en ce que** des éléments de renfort (37, 38a, 38b) sont placés dans le logement (33a, 33b).

9. Ensemble comportant un boitier (1) selon l'une des revendications précédentes, une batterie électrique (B) étant insérée contre la face principale (3a) de manière à être enserrée entre la structure de support (3) et le capot (2).

## Patentansprüche

1. Tragkasten (1) für eine Batterie, welcher eine Abdeckhaube (2), die an das Fahrgestell eines Fahrzeugs ansetzbar ist, und eine Tragstruktur (3), die geeignet ist, eine elektrische Batterie (B) aufzunehmen, aufweist, wobei die Tragstruktur (3) aus einer Hauptseite (3a) besteht, von der wenigstens ein Teil des Umfangs mit einer Einfassung (3b) ausgestattet ist, wobei die Tragstruktur (3) durch Kombination mehrerer Materialien hergestellt ist, wobei diese Materialien ein duktiles Material, ein widerstandsfähiges Material und ein Montagematerial umfassen,
**dadurch gekennzeichnet, dass** das Montagematerial ein spritzbares Kunststoffmaterial ist, das geeignet ist, den Kasten zu verstärken und/oder Schnittstellen für die Montage zu erzeugen.

2. Kasten (1) nach Anspruch 1, **dadurch gekennzeichnet, dass** das widerstandsfähige Material eine Zugstreckgrenze aufweist, die größer als 350 MPa ist.

3. Kasten (1) nach einem der Ansprüche 1 oder 2, **dadurch gekennzeichnet, dass** das duktile Material eine Zugdehnfähigkeit aufweist, die größer als 50 % ist.

4. Kasten (1) nach einem der Ansprüche 1 bis 3, **dadurch gekennzeichnet, dass** das Montagematerial einen Elastizitätsmodul zwischen 4 GPa und 12 GPa und/oder eine Streckgrenze zwischen 70 MPa und 150 MPa besitzt.

5. Kasten (1) nach einem der Ansprüche 1 bis 4, **dadurch gekennzeichnet, dass** die Einfassung (3b) von zwei im Wesentlichen geneigten Seiten (35b, 36b) gebildet wird, die durch einen zur Hauptseite (3a) parallelen oberen Rand (34b) miteinander verbunden sind.

6. Kasten (1) nach einem der Ansprüche 1 bis 5, **dadurch gekennzeichnet, dass** die Tragstruktur (3) aus einer unteren Haut (32) und einer oberen Haut (31) besteht, wobei diese Häute (31, 32) eine Aufnahme (33a, 33b) begrenzen.

7. Kasten (1) nach Anspruch 6, **dadurch gekennzeichnet, dass** die untere Haut (32) eben ist und die obere Haut (31) gewellt ist, wobei diese obere Haut (31) untere Punkte, die sich mit der unteren Haut (32) in Kontakt befinden, und obere Punkte, die dazu bestimmt sind, mit der elektrischen Batterie (B) in Kontakt zu kommen, aufweist.

8. Tragkasten (1) nach einem der Ansprüche 6 oder 7, **dadurch gekennzeichnet, dass** in der Aufnahme (33a, 33b) Verstärkungselemente (37, 38a, 38b) angeordnet sind.

9. Anordnung, welche einen Kasten (1) nach einem der vorhergehenden Ansprüche aufweist, wobei eine elektrische Batterie (B) an der Hauptseite (3a) anliegend eingesetzt ist, derart, dass sie zwischen der Tragstruktur (3) und der Abdeckhaube (2) eingespannt ist.

## Claims

1. Support housing (1) for a battery, comprising a cover (2) that can be attached to the chassis of a vehicle, and a support structure (3) that is able to receive an electric battery (B), said support structure (3) consisting of a main face (3a) of which at least a portion of the periphery is equipped with a rim (3b), the support structure (3) being made by combining multiple materials, which materials include a ductile material, a strong material and an assembly material, **characterized in that** said assembly material is an injection-mouldable plastic material that can reinforce said housing and/or create interfaces for assembly.

2. Housing (1) according to Claim 1, **characterized in that** the strong material has a tensile elastic limit greater than 350 MPa.

3. Housing (1) according to Claim 1 or 2, **characterized in that** the ductile material has a tensile elongation capacity greater than 50%.

4. Housing (1) according to one of Claims 1 to 3, **characterized in that** the assembly material has a modulus of elasticity between 4 GPa and 12 GPa and/or an elastic limit between 70 MPa and 150 MPa.

5. Housing (1) according to one of Claims 1 to 4, **characterized in that** the rim (3b) is formed by two substantially inclined faces (35b, 36b) attached via an upper edge (34b) parallel to the main face (3a).

6. Housing (1) according to one of Claims 1 to 5, **characterized in that** the support structure (3) is composed of a lower skin (32) and an upper skin (31), said skins (31, 32) delimiting a cavity (33a, 33b).

7. Housing (1) according to Claim 6, **characterized in that** the lower skin (32) is planar and the upper skin (31) is corrugated, which upper skin (31) has lower points in contact with the lower skin (32) and upper points designed to come into contact with the electric battery (B).

8. Housing (1) according to either of Claims 6 and 7, **characterized in that** reinforcement elements (37, 38a, 38b) are placed in the cavity (33a, 33b).

9. Assembly comprising a housing (1) according to one of the preceding claims, an electric battery (B) being inserted against the main face (3a) so as to be held between the support structure (3) and the cover (2).
